# EUROPÄISCHE PATENTSCHRIFT

(11) **EP 1 253 494 B1**
(45) Veröffentlichungstag und Bekanntmachung des Hinweises auf die Patenterteilung: **30.09.2009**
(21) Anmeldenummer: 02009582.4
(22) Anmeldetag: 26.04.2002
(51) Int. Cl.: G05B 19/05

(54) **Steuer- und/oder Regelungssystem mit Feldbus**
Control device with field bus
Système de commande et/ou de régulation comportant un bus de terrain

(30) Priorität: 26.04.2001 DE 10120558
(43) Veröffentlichungstag der Anmeldung: 30.10.2002
(73) Patentinhaber: SIEMENS AKTIENGESELLSCHAFT, 80333 München (DE)
(72) Erfinder: Dorr, Josef, 90584 Allersberg (DE); Maul, Juergen, 92237 Sulzbach-Rosenberg (DE); Steindl, Günter, 92284 Poppenricht (DE); Stromberger, Rudolf, 91177 Thalmässing (DE); Weber, Karl, 90518 Altdorf (DE)

(56) Entgegenhaltungen:
- DE-A1- 19 917 354
- DE-A1- 19 943 724

## Beschreibung

### Technisches Gebiet

Die Erfindung betrifft ein Verfahren und ein Steuer- und/oder Regelungssystem zum Steuern und/oder Regeln von verschiedenen Einrichtungen wie Antriebe, Stelltriebe, Sensoren etc., die über ein Feldbussystem an eine gemeinsame Steuer- und/oder Regelungsvorrichtung angeschlossen sind. Derartige Systeme sind in automatisierten Be- und Verarbeitungsanlagen zur Steuerung und/oder Regelung der für die jeweiligen Produktions- oder Arbeitsabläufe notwendigen einzelnen Betriebseinrichtungen notwendig. Insbesondere sind Automatisierungssysteme oder automatisch arbeitende Anlagen mit derartigen Steuer- bzw. Regelungssystemen ausgestattet.

### Stand der Technik

Allgemein ist in Automatisierungssystemen oder Fertigungsanlagen und dergleichen eine Tendenz zur Dezentralisierung und Verteilung festzustellen. In verteilten Systemen, Anlagen- und Maschinenkonfigurationen werden Eingänge wie Messwerte, Positionsangaben etc. und Ausgänge wie beispielsweise Stellsignale (u.a. Drehzahl, Position etc.) sowohl gesteuert und/oder auch geregelt über ein Feldbussystem verarbeitet. Genauer gesagt werden im Peripheriebereich ermittelte Eingangs- bzw. Istwerte von einer Steuer- bzw. Regelungsvorrichtung über ein Feldbussystem eingelesen, zentral in einer CPU des Steuerungs- bzw. Regelungssystems verarbeitet und über das Feldbussystem als Stellgröße der Ausgangsperipherie mitgeteilt.

Dabei werden häufig hohe dynamische Anforderungen über die gesamte Verarbeitungskette von der Ebene der Peripheriesignal, dem Feldbussystem bis zur Verarbeitungsinstanz, also dem Programm in der Steuer- bzw. Regelung gestellt.

Die technologische Applikation erfordert in echtzeitkritischen Anwendungen ein strikt einzuhaltendes Zeitraster der Verarbeitung über die gesamte Wirkungskette und eine vollsynchrone sowie jitterfreie Bearbeitung der Peripheriesignale sowohl beim Erfassen der Eingänge als auch beim Bereitstellen der Ausgänge. Die erreichbare Qualität und Güte der technologischen Applikation hängt dabei stark von den dynamischen Verhältnissen im Laufzeitsystem ab und ist im Wesentlichen von folgenden Faktoren mitbestimmt. So hat ein wesentlicher Anteil die Größe des strikt einzuhaltenden Verarbeitungszeitrasters, also des Äquidistanzzyklus. Auch die Höhe des maximal auftretenden Jitters des Äquidistanzzyklus ist von großer Bedeutung wie auch die Synchronität, d. h. die Gleichzeitigkeit der Bearbeitung der Peripheriesignale, also der Ein- und Ausgänge.

Bisherige, rein zentrale Automatisierungssysteme erreichten struktur- und implementierungsbedingt akzeptable Werte bei diesen zeitkritischen Parametern. Dezentrale Systeme hingegen verlieren hier durch weiträumigere Verteilung der beteiligten Komponenten und wegen der weitestgehenden Asynchronität diverser Bearbeitungszyklen in den Automatisierungskomponenten, also Steuerung, Feldbus, zentrale Peripherie etc., deutlich an Qualität, was beispielsweise in der Antriebs- und Regelungstechnik basierten Automatisierung von Produktionsabläufen bis hin zu numerischen Werkzeugmaschinen besonders kritisch im Hinblick auf die resultierende bzw. geforderte Regelungsgüte und Qualität ist. Die Asynchronität wird zusätzlich noch verstärkt durch den offenen Ansatz in der Feldtechnik, bei dem Geräte unterschiedlichster Komponentenlieferanten des Automatisierungssystems nicht synchronisiert betrieben werden können.

Bisher wurden zentrale, proprietäre Systeme eingesetzt, die mit hochspeziellen und firmenspezifischen Lösungen die erforderlichen Leistungsdaten für die Systeme wie Verarbeitungszyklen, Zyklenkonstanz etc. erreichen konnten. Dies wird heute zunehmend weniger von Anwendern akzeptiert, da sie die Vorteile der offenen Feldtechnik uneingeschränkt nutzen möchten. Diese Vorteile sind: Interoperabilität, Interchangeability. Hochspezielle Bussysteme, wie sie beispielsweise unter dem Markennamen SERCOS bekannt sind, werden wegen ihrer geringen Marktdurchdringung und ihrer Einschränkung auf Spezialsegmente nicht flächendeckend akzeptiert.

DE 199 43 724 A1 offenbart eine Anordnung zum Synchronisieren der Taktgeber von Slave-Einrichtungen, bei welcher der Master ein Synchronisationssignal an die Slaves schickt. Die Slaves weisen Taktgeber auf und schicken digitalisierte Taktsignale über den Feldbus zurück an den Master. Auf diese Weise soll erreicht werden, dass sich die Taktsignale der Slaves im Takt miteinander befinden.

Aus der DE 199 17 354 A1 ist ein Synchronisationsverfahren für eine Haupteinheit und mindestens eine Nebeneinheit mit internen, miteinander zu synchronisierenden Zeitgebern bekannt, die über zwei Kommunikationswege miteinander verbunden sind. Weiterhin offenbart die DE 199 17 354 A1 ein entsprechendes Kommunikationssystem sowie eine Haupteinheit und eine Nebeneinheit für ein derartiges Kommunikationssystem.

### Darstellung der Erfindung

Das der Erfindung zugrunde liegende technische Problem besteht darin, ein Steuer- und/oder Regelungssystem bereitzustellen, das trotz der Ankopplung der zu steuernden bzw. zu regelnden Komponenten über ein gemeinsames Feldbussystem auch hochdynamischen Anforderungen gerecht wird.

Ein weiteres der Erfindung zugrunde liegendes technisches Problem besteht darin, ein hochdynamischen Anforderungen gerecht werdendes Verfahren bereitzustellen, mit dem über ein gemeinsames Feldbussystem an eine Steuer- und/oder Regelungsvorrichtung angeschlossene Komponenten gesteuert und/oder geregelt werden können.

Diese technischen Probleme werden durch ein Steuer- und/oder Regelungssystem mit den Merkmalen des Anspruchs 1 bzw. durch ein Verfahren mit den Merkmalen des Anspruchs 7 gelöst.

Der Erfindung liegt der Gedanke zugrunde, die bisher frei laufenden Verarbeitungszyklen starr an den Zyklus des Feldbussystems zu koppeln, indem ein Takt zur Synchronisation vorgegeben wird. Insbesondere sollen die bisher frei laufenden Verarbeitungszyklen der gesamten Wirkungskette von den Ein- und Ausgängen über proprietäre Rückwandbussysteme der dezentralen, an dem Feldbus angeschlossenen Komponenten wie Peripheriestation oder Feldgeräte (Messeinrichtungen, Antriebe, Sensoren, Werkzeuge etc. ) bis über den Feldbus selbst hin zur Verarbeitungsebene, d.h. der Programmbearbeitung in der Steuer- bzw. Regelungsvorrichtung starr gekoppelt werden. Damit ist es vorzugsweise möglich, die Eingangs- bzw. Messwerterfassung in diesem durch das Synchronisationssignal vorgegebenen Äquidistanzraster synchron zu erfassen, d.h. diese Werte zu genau festgelegten, in einem vorgegebenen zeitlichen Abstand zueinander liegenden Zeitpunkten zu erfassen, wodurch alle an dem Feldbussystem angeschlossenen Komponenten zeitlich aufeinander abstimmbar sind, insbesondere die einzelnen Werte (Ein- und Ausgänge) zu vorgegebenen Zeitpunkten abrufbar sind. Es ist damit erstmals möglich, auch die aus den Eingangswerten errechneten Stellgrößen zu bestimmten Zeitpunkten auszugeben bzw. diesen Werten einen bestimmten Zeitpunkt zuzuordnen, wodurch die einzelnen, am Feldbussystem angeschlossenen Komponenten gleichzeitig mit den jeweiligen Werten versorgbar sind.

Durch diese Maßnahmen erfolgt eine auch hochdynamischen Verhältnissen gerecht werdende genaue Steuer- bzw. Regelung einer mehrere über das Feldbussystem angekoppelte Komponenten umfassenden Anlage wie beispielsweise eine Durchlaufbearbeitungsanlage oder dergleichen.

Es erfolgt ferner vorzugsweise eine starre und synchrone Kopplung des Feldbuszyklus an die Verarbeitungstasks in der Steuer- bzw. Regelung. Insbesondere ist ein synchrones Einfrieren der Eingänge und eine Übertragung der Eingänge in Wechselpuffer möglich. Außerdem ist ein synchroner Start der Verarbeitungstasks mit Pufferwechsel und konsistenten Nutzdatenabbild für die Verarbeitungstasks durchführbar.

Vorzugsweise ist ein Wechselpuffer vorhanden, der die Verarbeitungszyklen in der Feldbusebene und der Programmbearbeitung in der Steuer bzw. Regelung voneinander trennt. Durch Puffertausch und Synchronisationsimpulse erfolgt ein synchrones Ausgeben der Ausgänge zum Prozess. Die Stellgrößen, also die Ausgänge, werden im nächsten oder weiteren Zyklus u.U. auch asynchron ausgegeben.

Zwischen dem Verarbeitungstask und dem Äquidistanzzyklus ist also ein enger und strikter Zeitbezug vorgegeben. Sollte aufgrund von Fehlern in Übertragungssystemen der Äquidistanzzyklus sporadisch oder permanent verfehlt werden oder ein Verarbeitungstask langsamer sein als der Äquidistanzzyklus, so ergeben sich an der Aufrufschnittstelle des Verarbeitungstasks insbesondere folgende Besonderheiten. Es wird kommunikationsseitig, z.B. bei Busstörungen im Feldbussystem mit hoher Wiederholungsrate von Telegrammen, die Äquidistanzzeit überschritten, so erhält der Verarbeitungstask in seiner Startfunktion die entsprechende Signalisierung inklusive des Abweichungswertes vom Äquidistanzzyklus. Die Applikation in der Verarbeitungstask kann dann ein entsprechendes Fehlermanagement durchführen.

Verlängert sich der Bearbeitungstask in der Steuerung über den Äquidistanzzyklus hinaus, z.B. wegen extremer Interrupt-Last, greift das Wechselprinzip dahingehend, dass mit alten, im Puffer befindlichen Werten, weitergearbeitet wird, bis die neue Task neue Werte zur Verfügung stellt.

Durch diese neuartige Ausgestaltung eines Steuer- und Regelungssystems profitieren hier insbesondere antriebsbasierte Systeme in der Produktionsautomatisierung und im Werkzeugmaschinenbau. Es können neben Einachsaufgaben auch verkoppelte Achsen realisiert werden.

Falls ein Regelungstask länger dauert als der Zeitabstand zwischen zwei Zeitpunkten, die durch das Synchronisationssignal vorgegeben sind, das heißt, einem Äquidistanzzyklus, so ist dies kein Problem, da für die Verarbeitung immer bekannt ist, wann welche Werte generiert und abgespeichert wurden. So kann zu bestimmten Zeitpunkten immer auf die entsprechend passend synchronisierten Werte (Ein- und Ausgänge) zurückgegriffen werden.

### Kurze Beschreibung der Zeichnungen

Im Folgenden sind zum besseren Verständnis und zur Erläuterung mehrere Ausführungsbeispiele der Erfindung unter Bezugnahme auf die beigefügten Zeichnungen näher beschrieben. Es zeigt:
- Fig. 1: eine schematische Darstellung eines Steuer- und/oder Regelungssystems gemäß der Erfindung,
- Fig. 2: eine schematisierte Darstellung der über das gemeinsame Feldbussystem erfolgenden Abläufe über die Zeit und
- Fig. 3: eine schematisierte Darstellung ähnlich der Fig. 2 mit verschiedenen Ebenen.

### Beschreibung von Ausführungsbeispielen der Erfindung

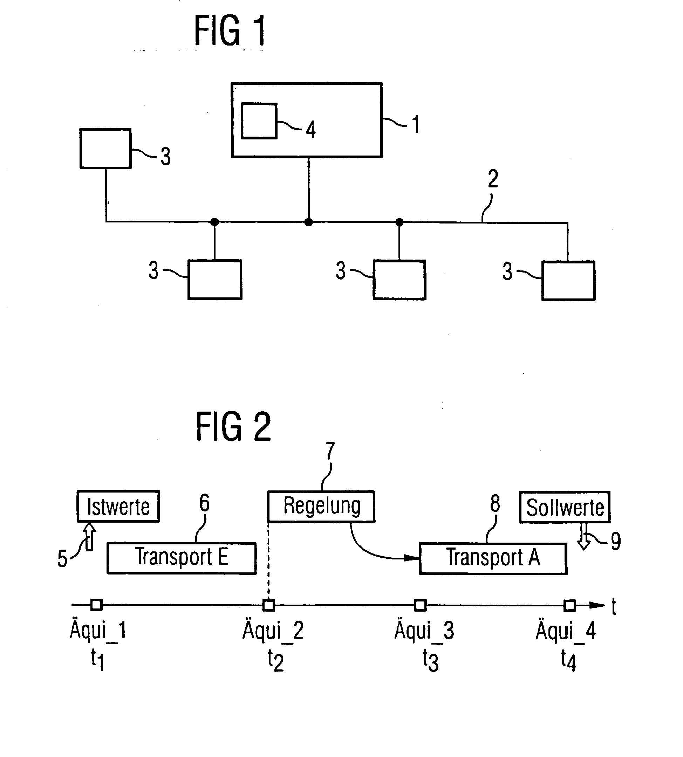

Der grundsätzliche Aufbau eines Steuerungs- und/oder Regelungssystems gemäß der Erfindung ist aus der Fig. 1 ersichtlich. Hier ist eine Steuer- und/oder Regelungsvorrichtung 1 über ein Profibussystem 2 mit verschiedenen Komponenten 3 wie beispielsweise Messwertaufnehmer, Sensoren, Antriebe, Werkzeuge, Stellglieder etc. verbunden. Im vorliegenden Fall ist das Feldbussystem 2 ein Profibus DP. In der Steuer- und/oder Regelungsvorrichtung 1 ist erfindungsgemäß eine Synchronisationssignal-Generierungseinrichtung 4 vorhanden, die ein Synchronisationssignal generiert, mit dem die Zyklen des Feldbussystems 2 mit den Verarbeitungstasks in der Steuerund/oder Regelungsvorrichtung 1 gekoppelt werden. Hierzu wird im Folgenden noch näher eingegangen. Im Hinblick auf die Ausgestaltung des Feldbussystems wird auf die weitverbreitete Literatur, insbesondere der zum Profibus DP verwiesen. Diese Literatur wird hier ausdrücklich durch Bezugnahme mit aufgenommen.

In üblicher Weise werden durch die Einrichtungen 3, Feldgeräte oder Komponenten Messwerte oder Positionsangaben über das Feldbussystem 2 an die Steuerungs- und/oder Regelungsvorrichtung 1 übermittelt. Dort wird eine Verarbeitung durchgeführt, d.h. ein Programmablauf erfolgt mit den durch die Komponenten 3 gegebenen Eingangssignalen, d.h. Eingangswerten. Die errechneten Ausgangswerte, Stellgrößen bzw. Stellwerte werden wiederum über das Profibussystem DP 2 an die Komponenten 3 übermittelt, die dann entsprechend verfahren oder gesteuert bzw. geregelt werden. Damit ist eine automatische Steuer- und/oder Regelung einer mehrere Motoren, Werkzeuge etc. umfassenden Anlage wie beispielsweise eine Durchlaufbearbeitungsanlage regelbar.

In der Fig. 2 ist nun die erfindungsgemäße Triggerung der Abläufe besser ersichtlich. Hier ist über den Zeitstrahl t die regelmäßige periodische Signalgenerierung mit Äqui_1, Äqui_2, Äqui_3 und Äqui_4 bzw. t₁ - t₄ veranschaulicht. Zu dem Zeitpunkt t₁ werden Istwerte im Verfahrensschritt 5 von einer Komponente 3 zum Feldbussystem 2 übertragen. Im Verfahrensschritt 6 erfolgt dann der Transport dieser Werte zu der Steuer- und oder Regelungsvorrichtung 1. Dieser Transport liegt im vorliegenden Fall innerhalb eines Äquidistanzzyklus, d.h. zwischen den Zeitpunkten t₁ und t₂. Zum Zeitpunkt t₂ erfolgt dann in einem Verarbeitungstask die Regelung gemäß Verfahrensschritt 7, die Ausgangssignale, d.h. die Stellwerte, werden dann zum Zeitpunkt t₃ an das Feldbussystem 2 übertragen. Zwischen den Zeitpunkten t₃ und t₄ erfolgt dann in einem weiteren Verfahrensschritt 8 der Transport der Ausgangswerte zu den einzelnen Komponenten. Zum Zeitpunkt t₄ erfolgt schließlich die Übertragung dieser Werte in einem weiteren Verfahrensschritt 9. Die Zeitabstände zwischen den einzelnen Zeitpunkten t₁ - t₄ sind immer gleich und durch das Synchronisationssignal vorgegeben.

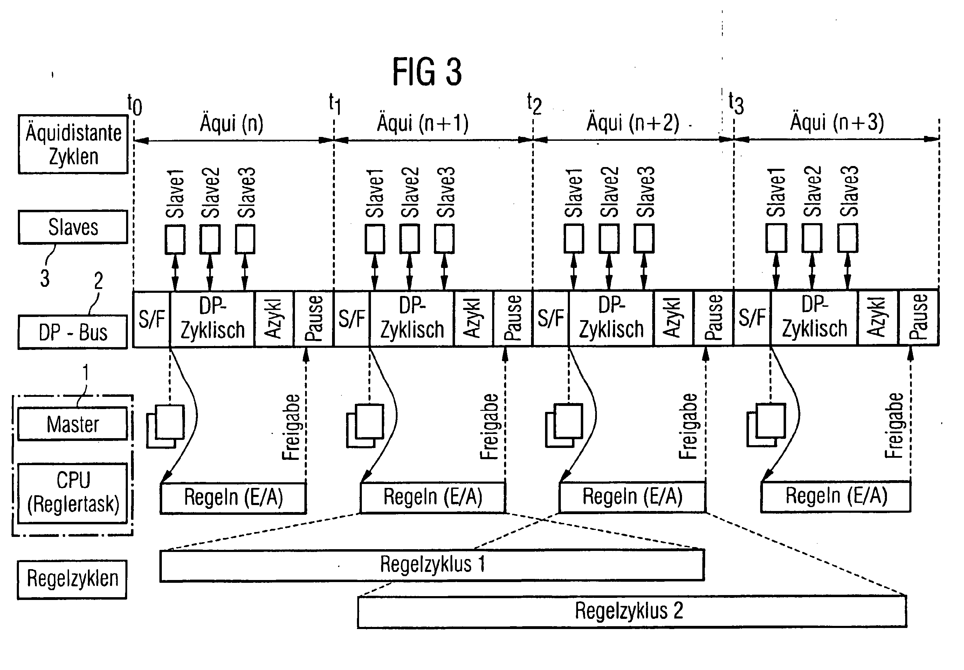

Eine genauere Darstellung der einzelnen Abläufe ist in der Fig. 3 gezeigt. Hier ist dargestellt, dass ein Äquidistanzzyklus verschiedene Zyklen umfasst, ein Regelungszyklus in einer Steuer- und/oder Regelungseinrichtung 1 kann aber länger als ein Äquidistanzzyklus dauern, das ist jedoch kein Problem, da dann für diesen Regelungszyklus auf vorgegebene Werte zurückgegriffen wird, die zu einem bestimmten Zeitpunkt t₀ - tₙ abgespeichert und damit zueinander synchronisiert sind.

Wie in der Fig. 3 schematisch dargestellt und wie es bereits zuvor erläutert wurde, werden allgemein zu Zeiten t(x)- k (k = Konstante die Eingangssignale oder Werte (erfasste Istwerte) ausgegeben und zu Zeiten t(x)+ k (k = Konstante werden die Ausgangswerte bzw. Ausgangssignale (Sollwerte) ausgegeben. Mit Slaves sind hier die Komponenten 3 gemeint. In der Fig. 3 ist in einfachster Weise verdeutlicht, wie das zyklische Lesen bzw. Schreiben der Ein- und Ausgangssignale von den einzelnen Komponenten über die Zeitachse, d.h. pro Äquidistanzzyklus erfolgt. Es wird also pro Äquidistanzzyklus von jeder Komponente 3 einmal ein von der Steuer- und/oder Regelungsvorrichtung 1 (setzt sich in der Fig. 3 aus Master und CPU zusammen) errechneter Sollwert gelesen und ein erfasster Istwert geschrieben, der dann über den Feldbus 2 an die Steuer- und/oder Regelungsvorrichtung übermittelt wird. Das Synchronisationssignal gemäß der Erfindung bestimmt den Äquidistanztakt für die Slaves bzw. Komponenten 3. Der Äquidistanztakt wird entsprechend zur Synchronisation der Erfassung der Ein- und Ausgabewerte benutzt.

Bei der in der Fig. 3 gezeigten Darstellung ist mit S/F das Taktsignal (d.h. ein spezielles Broadcast-Telegramm) veranschaulicht, das den Äquidistanztakt vorgibt. Mit DPzyklisch ist das zyklische Abfragen der Komponenten veranschaulicht (d.h. read/write von Ein- und Ausgabewerten). Der Block Azykl veranschaulicht eine azyklische DP-Kommunikation. Mit dem Block Pause wird veranschaulicht, dass abgewartet wird, bis die Äquidistanzzeit abgelaufen ist.

Bei dem hier gezeigten Master 1 handelt es sich um einen mit einem Wechselpuffer. Mit dem Äquidistanztakt werden die Eingabe- und Ausgabepuffer getauscht. Hier wird ein Puffer von der Applikation bzw. CPU benutzt. Ein Puffer wird vom Bussystem bzw. den Komponenten 3 benutzt. Der Master 1 darf den Pufferwechsel nur durchführen, wenn das Freigabesignal (aus dem letzten Äquidistanzzyklus) vorhanden ist. Nach dem Pufferwechsel wird die Freigabeanordnung durch den Master 1 wieder zurückgesetzt. Es wird entsprechend auf eine neue Freigabeanforderung gewartet. Dieses Zusammenspiel der Puffer bewirkt, dass die Eingabesignale aller Komponenten immer aus einem Zeitpunkt t(x) stammen. Damit wird eine Konsistenzsicherung bewirkt.

Der eigentliche Regelungstask wird in der dargestellten CPU durchgeführt und es erfolgt die Abarbeitung der zur Regelung notwendigen Programmschritte. Der Regelungstask wird mit dem Äquidistanztakt aufgerufen. Nach Abarbeitung der verschiedenen Programmschritte zum Steuern bzw. zur Regelung erfolgt aus diesem Regelungstask ein Freigabesignal an den Master 1. Damit ist der Master fertig für einen Pufferwechsel.

In dem letzten Block, der mit "Regelzyklen" gekennzeichnet ist, ist schematisch die Dauer eines kompletten Regelungszyklus von der Eingabe (Zeitpunkt t₀ - k) über die Regelung mit diesen Eingabewerten bis zur Ausgabe der Regelungsergebnisse (Zeitpunkt t₃ + k) dargestellt.

## Patentansprüche

1. Steuer- und/oder Regelungssystem mit
- zumindest einer Steuer- und/oder Regelungsvorrichtung (1) zur Durchführung von Verarbeitungstasks,
- mehreren über ein gemeinsames Feldbussystem (2) an die Steuer- und/oder Regelungsvorrichtung (1) angeschlossenen Komponenten (3), die über das Feldbussystem (2) Signale zu der Steuer- und/oder Regelungsvorrichtung (1) senden und über das Feldbussystem (2) von der Steuer- und/oder Regelungsvorrichtung (1) Signale erhalten, und
- einer Synchronisationssignal-Generierungseinrichtung (4), die ein Synchronisationssignal generiert, mit dessen Hilfe die Zyklen des Feldbussystems (2) an die in der Steuer- und/oder Regelungsvorrichtung (1) erfolgenden Verarbeitungstasks starr koppelbar sind,
**dadurch gekennzeichnet, dass** die Ausgabe der Signale der Steuer- und/oder Regelungsvorrichtung (1) durch das Synchronisationssignal getriggert ist.

2. Steuer- und/oder Regelungssystem nach Anspruch 1, **dadurch gekennzeichnet, dass** die Synchronisationssignal-Generierungseinrichtung (4) hardwaremäßig ausgebildet ist.

3. Steuer- und/oder Regelungssystem nach einem der voranstehenden Ansprüche, **dadurch gekennzeichnet, dass** Datenspeicher vorhanden sind, in denen Ausgangssignale der einzelnen Komponenten (3) zum Zeitpunkt des generierten Synchronisationssignals zeitlich zuordenbar zu speichern sind.

4. Steuer- und/oder Regelungssystem nach einem der voranstehenden Ansprüche, **dadurch gekennzeichnet, dass** die programmmäßige Verarbeitung eines Signals einer Komponente (3) in der Steuer- und Regelungsvorrichtung (1) durch das Synchronisationssignal zu starten ist.

5. Steuer- und/oder Regelungssystem nach einem der voranstehenden Ansprüche, **dadurch gekennzeichnet, dass** das Feldbussystem (2) ein ProfibusDP ist.

6. Verfahren zum Steuern und/oder Regeln von verschiedenen Komponenten (3), die über ein gemeinsames Feldbussystem (2) an eine Steuer- und/oder Regelungsvorrichtung (1) angeschlossen sind und über das Feldbussystem (2) Signale zu der Steuer- und/oder Regelungsvorrichtung (1) senden und über das Feldbussystem (2) von der Steuer- und/oder Regelungsvorrichtung (1) Signale erhalten, bei dem in periodisch wiederkehrenden Zeitabständen ein Synchronisationssignal generiert wird, mit dessen Hilfe die Zyklen des Feldbussystems (2) an die in der Steuer- und/oder Regelungsvorrichtung (1) erfolgenden Verarbeitungstasks gekoppelt werden,
**dadurch gekennzeichnet, dass** die Ausgabe der Signale der Steuer- und/oder Regelungsvorrichtung (1) durch das Synchronisationssignal getriggert ist.

7. Verfahren nach Anspruch 6,
**dadurch gekennzeichnet, dass** der Zeitabstand zwischen zwei Synchronisationssignalen frei wählbar ist.

8. Verfahren nach Anspruch 6 oder 7,
**dadurch gekennzeichnet, dass** durch das periodisch synchronisierte Synchronisationssignal über das Feldbussystem (2) zeitgleich die von den einzelnen Komponenten (3) ausgegebenen Signale erfasst werden.

9. Verfahren nach einem der Ansprüche 6 - 8,
**dadurch gekennzeichnet, dass** von der Steuer- und/oder Regelungsvorrichtung (1) zu einem durch ein Synchronisationssignal vorgegebenen Zeitpunkt auf die synchronisierten, von den einzelnen Komponenten (3) ausgegebenen Signale zugegriffen wird.

10. Verfahren nach einem der Ansprüche 6 - 9,
**dadurch gekennzeichnet, dass** gemäß dem durch das Synchronisationssignal vorgegebenen Zeitpunkt von der Steuer- und/oder Regelungsvorrichtung (1) über das Feldbussystem (2) Signale ausgegeben werden.

11. Verfahren nach einem der Ansprüche 6 - 10,
**dadurch gekennzeichnet, dass** die von der Steuer- und/oder Regelungsvorrichtung ausgegebenen Signale Sollwerte für die einzelnen Komponenten (3) sind.

12. Verfahren nach einem der Ansprüche 6 - 11,
**dadurch gekennzeichnet, dass** zu einem durch das Synchronisationssignal vorgegebenen Zeitpunkt ein Verarbeitungstask gestartet wird.

13. Verfahren nach einem der Ansprüche 6 - 12,
**dadurch gekennzeichnet, dass** die Ein- und Ausgangssignale in äquidistanten Abständen entsprechend dem Synchronisationssignal abgetastet werden.

## Claims

1. Open-loop and/or closed-loop control system with
- at least one open-loop and/or closed-loop control facility (1) for executing processing tasks,
- a number of components (3) connected via a common field bus system (2) to the open-loop and/or closed-loop control facility (1), which send signals over the field bus system (2) to the open-loop and/or closed-loop control facility (1) and receive signals over the field bus system (2) from the open-loop and/or closed-loop control facility, and
- a synchronisation signal generation device (4) which generates a synchronisation signal with the aid of which the cycles of the field bus system (2) are able to be rigidly coupled to the processing tasks taking place in the open-loop and/or closed-loop control facility (1),
**characterised in that** the output of the signals of the open-loop and/or closed-loop control facility (1) is triggered by the synchronisation signal.

2. Open-loop and or closed-loop control facility, according to claim 1, **characterised in that** the synchronisation signal generation device (4) is embodied as hardware.

3. Open-loop and or closed-loop control system according to one of the previous claims, **characterised in that** memories are available in which output signals of the individual components (3) are to be stored at the time of the generated synchronisation signal able to be assigned to a particular time.

4. Open-loop and or closed-loop control system according to one of the previous claims, **characterised in that** the programmed processing of a signal of a component (3) in the open-loop and or closed-loop control facility (1) is to be started by the synchronisation signal.

5. Open-loop and or closed-loop control system according to one of the previous claims, **characterised in that** the field bus system (2) is a ProfibusDP.

6. Method for open-loop and/or closed-loop control of different components (3) which are connected via a common field bus system (2) to an open-loop and/or closed-loop control facility and send signals over the field bus system (2) to the open-loop and/or closed-loop control facility (1) and receive signals from the open-loop and/or closed-loop control facility (1) over the field bus system in which, at periodically recurring intervals, a synchronisation signal is generated with the aid of which the cycles of the field bus system (2) are coupled to the processing tasks occurring in the open-loop and/or closed-loop control facility (1),
**characterised in that** the output of the signals of the open-loop and/or closed-loop control facility (1) is triggered by the synchronisation signal.

7. Method according to claim 6,
**characterised in that** the interval between two synchronisation signals is freely selectable.

8. Method according to claim 6 or 7,
**characterised in that** the signals output by the individual components (3) are detected at the same time by the periodically synchronised synchronisation signal over the field bus system.

9. Method according to claim 6 to 8,
**characterised in that** there is access by the open-loop and/or closed-loop control facility (1) at a point in time predetermined by the synchronisation signal to the synchronised signals output by the individual components (3).

10. Method according to one of the claims 6 - 9,
**characterised in that** signals are output in accordance with the point in time predetermined by the synchronisation signal from the open-loop and/or closed-loop control facility (1) over the field bus.

11. Method according to one of the claims 6 - 10,
**characterised in that** the signals output from the open-loop and/or closed-loop control facility are setpoint values for the individual components (3).

12. Method according to one of the claims 6 - 11,
**characterised in that** a processing task is started at a point in time predetermined by the synchronisation signal.

13. Method according to one of the claims 6 - 12,
**characterised in that** the input and output signals are sampled at equidistant spacing in accordance with the synchronisation signal.

## Revendications

1. Système de commande et/ou de régulation comprenant
- au moins un dispositif ( 1 ) de commande et/ou de régulation pour effectuer des tâches de traitement,
- plusieurs composants ( 3 ) qui sont raccordés par un système ( 2 ) commun de bus de terrain au dispositif ( 1 ) de commande et/ou de régulation, qui envoient par le système ( 2 ) de bus de terrain des signaux au dispositif ( 1 ) de commande et/ou de régulation et qui reçoivent par le système ( 2 ) de bus de terrain des signaux du dispositif ( 1 ) de commande et/ou de régulation, et
- un dispositif ( 4 ) de production de signal de synchronisation, qui produit un signal de synchronisation à l'aide duquel les cycles du système ( 2 ) de bus de terrain peuvent être couplés d'une manière fixe aux tâches de traitement s'effectuant dans le dispositif ( 1 ) de commande et/ou de régulation,
**caractérisé en ce que** l'émission des signaux du dispositif ( 1 ) de commande et/ou de régulation est déclenché par le signal de synchronisation.

2. Système de commande et/ou de régulation suivant la revendication 1, **caractérisé en ce que** le dispositif ( 4 ) de production du signal de synchronisation est constitué en matériel.

3. Système de commande et/ou de régulation suivant l'une des revendications précédentes, **caractérisé en ce qu'**il y a des mémoires de données dans lesquelles des signaux de sortie des divers composants ( 3 ) peuvent être mémorisés en pouvant être ordonnés dans le temps à l'instant où le signal de synchronisation est produit.

4. Système de commande et/ou de régulation suivant l'une des revendications précédentes, **caractérisé en ce que** le traitement programmé d'un signal d'un composant ( 3 ) dans le dispositif ( 1 ) de commande et de régulation peut être lancé par le signal de synchronisation.

5. Système de commande et/ou de régulation suivant l'une des revendications précédentes**, caractérisé en ce que** le système ( 2 ) de bus de terrain est un ProfibusDP.

6. Procédé de commande et/ou de régulation de divers composants( 3 ) qui sont raccordés par un système ( 2 ) commun de bus de terrain à un dispositif ( 1 ) de commande et/ou de régulation et qui envoient par le système ( 2 ) de bus de terrain des signaux au dispositif ( 1 ) de commande et/ou de régulation et qui reçoivent par le système ( 2 ) de bus de terrain des signaux du dispositif ( 1 ) de commande et/ou de régulation, dans lequel on produit, à des intervalles de temps se répétant périodiquement, un signal de synchronisation à l'aide duquel les cycles du système ( 2 ) de bus de terrain sont couplés aux tâches de traitement s'effectuant dans le dispositif ( 1 ) de commande et/ou de régulation, **caractérisé en ce que** l'émission des signaux du dispositif ( 1 ) de commande et/ou de régulation est déclenché par le signal de synchronisation.

7. Procédé suivant la revendication 6, **caractérisé en ce que** l'on peut choisir librement l'intervalle de temps entre deux signaux de synchronisation.

8. Procédé suivant l'une des revendications 6 ou 7, **caractérisé en ce que** l'on détecte par le signal de synchronisation, synchronisé périodiquement, par l'intermédiaire du système ( 2 ) de bus de terrain, en synchronisme les signaux émis par les divers composants ( 3 ).

9. Procédé suivant l'une des revendications 6 à 8, **caractérisé en ce que** l'on accède par le dispositif ( 1 ) de commande et/ou de régulation à un instant prescrit par un signal de synchronisation aux signaux synchronisés émis par les divers composants ( 3 ).

10. Procédé suivant l'une des revendications 6 à 9, **caractérisé en ce que** l'on émet, conformément à l'instant prescrit par le signal de synchronisation, des signaux par le dispositif ( 1 ) de commande et/ou de régulation par l'intermédiaire du système ( 2 ) de bus de terrain.

11. Procédé suivant l'une des revendications 6 à 10, **caractérisé en ce que** les signaux émis par le dispositif de commande et/ou de régulation sont des valeurs de consignes pour les divers composants ( 3 ).

12. Procédé suivant l'une des revendications 6 à 11, **caractérisé en ce qu'**on lance une tâche de traitement à un instant prescrit par le signal de synchronisation.

13. Procédé suivant l'une des revendications 6 à 12, **caractérisé en ce que** l'on échantillonne les signaux d'entrée et de sortie à des intervalles équidistants conformément au signal de synchronisation.
